Europäisches Patentamt

European Patent Office

Office européen des brevets

(11) Veröffentlichungsnummer: **0 373 568**
**A2**

(12) # EUROPÄISCHE PATENTANMELDUNG

(21) Anmeldenummer: **89122852.0**

(22) Anmeldetag: **11.12.89**

(51) Int. Cl.⁵: **G09F 3/03, B65D 55/02**

(30) Priorität: **13.12.88 SU 4643406**

(43) Veröffentlichungstag der Anmeldung:
**20.06.90 Patentblatt 90/25**

(84) Benannte Vertragsstaaten:
**AT DE FR GB IT**

(71) Anmelder: **KOOPERATIV DISH**
**ulitsa Egerskaya, 5, korpus 1, kv. 110**
**Moskau(SU)**

(72) Erfinder: **Shafirkin, David Isaakovich**
**ulitsa Egerskaya 5 Moscow**
**Korpus 1, kv. 110(SU)**

(74) Vertreter: **Finck, Dieter et al**
**Patentanwälte v. Füner, Ebbinghaus, Finck**
**Mariahilfplatz 2 & 3**
**D-8000 München 90(DE)**

(54) **Vorrichtung zum Verschliessen und Plombieren von Gegenständen.**

(57) Die Vorrichtung zum Verschließen und Plombieren von Gegenständen besteht aus einem Schließstab (1), an dessen einem Ende ein Anschlag und an dessen anderem Ende ein kegelstumpfförmiger Einsteckkopf (5) vorgesehen ist. Auf der Seite der größeren Grundfläche des Einsteckkopfs (5) ist am Schließstab (1) eine Ringnut (6) ausgebildet. Die Vorrichtung besteht ferner aus einem in einem Kunststoffgehäuse (3) angeordneten Schloß (2), das die Form eines Bechers hat und zum Anbringen am Schließstab (1) auf der Seite des Einsteckkopfs (5) dient. Im Hohlraum des Schlosses (2) befindet sich ein offener Sperring (10), mit dem der Schließstab (1) bei Anordnung in dessen Ringnut (6) zusammenwirkt. Die Vorrichtung ist mit einem Mittel (11) zur Gewährleistung der für die Zerstörung des Schlosses (2) erforderlichen Kraft versehen.

FIG.3

EP 0 373 568 A2

## VORRICHTUNG ZUM VERSCHLIESSEN UND PLOMBIEREN VON GEGENSTÄNDEN

Die Erfindung betrifft eine Vorrichtung zum Verschließen und Plombieren von Gegenständen, insbesondere von Transportbehältern, mit einem Schließstab, an dessen einem Ende ein Anschlag und an dessen anderem Ende ein kegelstumpfförmiger Einsteckkopf vorgesehen ist, mit einer Ringnut am Schließstab, die auf der Seite des Einsteckkopfes mit der größeren Grundfläche eingearbeitet ist, mit einem in einem Kunststoffgehäuse angeordneten Schloß, das die Form eines Bechers hat und für das Anbringen am Schließstab auf der Seite des Einsteckkopfes vorgesehen ist, und mit mindestens einem offenen Sperring, der im Hohlraum des Schlosses angeordnet ist und mit dem Schließstab bei der Anordnung in dessen Ringnut zusammenwirkt.

Eine solche von der Firma ONESEAL A/S in Dänemark hergestellte Vorrichtung wird vor allem zum Verschließen und Plombieren von Eisenbahnwaggons und verschiedenen Containern benutzt. Sie besteht aus einem Schließstab und einem Schloß. An einem Ende des Schließstabs befindet sich ein Anschlag, am anderen Ende ein kegelförmiger Einsteckkopf. Auf der Seite der Basis des Einsteckkopfes ist am Schließstab eine Ringnut ausgebildet. Das Schloß, das an den Schließstab auf der Seite des Einsteckkopfes angebracht wird, hat die Form eines Bechers und ist in einem Gehäuse installiert. Im Hohlraum des Schlosses ist ein offener Sperring vorgesehen. Der Sperring liegt in einem ringförmigen Einschnitt, der an der Innenfläche des Schlosses ausgespart ist. Der Sperring kommt bei der Aufnahme in die Ringnut des Einsteckkopfes in Kontakt mit ihm. Zum Entfernen der Vorrichtung vom Gegenstand wird der Schließstab durchtrennt, also zerstört.

Die bekannte Vorrichtung ermöglicht zwar ein manuelles Verschließen des jeweiligen Gegenstandes, wobei sie alle erforderlichen Informationen, wie die Nummer der Vorrichtung und die Marke der Herstellerfirma, trägt, ihre Verschlußsicherheit ist jedoch unzureichend, weil die erforderliche Zerstörung des Schließstabes bei befugtem Entfernen der Vorrichtung nur eine geringe Festigkeit des Schließstabs und der gesamten Vorrichtung zuläßt. Der offene Sperring hat einen kreisförmigen Längsausschnitt, der zum Einrasten des Sperrings im Schloß notwendig ist. Dadurch ist es möglich, wenn die Abreißkraft in einer bestimmten Richtung zur Einwirkung gebracht wird und wenn sich der Ausschnitt des Sperrings in einer bestimmten Position befindet, das Schloß unbefugt vom Schließstab abzunehmen, wodurch die Vorrichtung schnell vom Gegenstand genommen und schnell wieder in Verschlußposition angebracht werden kann.

Der Erfindung liegt deshalb die Aufgabe zugrunde, die gattungsgemäße Vorrichtung so auszubilden, daß sie für ein zuverlässiges Verschließen eines Gegenstandes ausreichend fest ist und ihre Wiederanbringung nach einem unbefugten Abnehmen ausschließt.

Diese Aufgabe wird ausgehend von der gattungsgemäßen Vorrichtung durch ein Mittel zur Gewährleistung der erforderlichen Kraft für die Zerstörung des Schlosses gelöst.

Bei der erfindungsgemäßen Ausgestaltung der Vorrichtung wird nicht der Schließstab, sondern das Schloß zerstört, so daß der Schließstab ausreichend fest ausgebildet und mehrmals verwendet werden kann.

Die Ausführung des Mittels zur Gewährleistung der für die Zerstörung des Schlosses erforderlichen Kraft als ein ringförmiger Einschnitt auf der Stirnfläche des Schlosses auf der Seite des Einsteckkopfes ist besonders einfach und ergibt eine verhältnismäßig hohe Reißsicherheit des Schlosses an der gegebenen Stelle. Durch die Veränderung der Tiefe des ringförmigen Einstichs läßt sich die Reißkraft für das Schloß einstellen.

In den Fällen, in denen bei der Vorrichtung ein Schloß mit relativ dünnen Stirnwänden verwendet wird, ist es erforderlich, das Mittel zur Gewährleistung der für die Zerstörung des Schlosses erforderlichen Kraft mit einem Abreißring zu versehen, der im Hohlraum des Schlosses zwischen dem offenen Sperring und der Innenfläche der Stirnwand des Schlosses auf der Seite des Einsteckkopfes angeordnet ist. Dabei ist der Außendurchmesser des Abreißringes größer als der Durchmesser des offenen Sperrings, jedoch nicht größer als der Durchmesser des ringförmigen Einschnitts. Das Schloß setzt sich dabei aus zwei miteinander fest verbundenen Teilen zusammen.

Das Vorhandensein des Abreißringes schützt den offenen Sperring vor Deformationen. Die erwähnten Durchmesserabmessungen gewährleisten die Funktionstüchtigkeit der Vorrichtung. Die Anordnung des Abreißringes im Hohlraum des Schlosses ist erforderlich, um die Bereitstellung der Vorrichtung nach dem Baukastenprinzip zu ermöglichen.

Um eine höhere Festigkeit der Vorrichtung und dementsprechend eine größere Greifkraft des offenen Sperrings um den Einsteckkopf zu erlangen, ist es notwendig, die Innenfläche des Abreißringes auf der dem offenen Sperring zugewandten Stirnseite kegelförmig zu gestalten.

Das Mittel zur Gewährleistung der für die Zerstörung des Schlosses erforderlichen Kraft kann mit einer zusätzlichen ringförmigen Aussparung versehen werden, die sich auf der vom Einsteckkopf abgewandten Stirnseite des Schlosses befindet. Die zusätzliche ringförmige Aussparung erlaubt ein Entriegeln der Vorrichtung durch Herausdrücken des Schließstabs aus dem Schloß.

Wenn die Vorrichtung mit einem Informationsschild versehen ist, das mit dem Gehäuse des Schlosses fest verbunden ist, können erforderliche Informationen, zum Beispiel die Nummer des Transportmittels, unmittelbar vor dem Anbringen der Vorrichtung an den zu verschließenden Gegenstand kenntlich gemacht werden.

Die erfindungsgemäße Vorrichtung zum Verschließen und Plombieren von Gegenständen ermöglicht eine zuverlässige Verriegelung der Türen von unter Verschluß zu haltenden Gegenständen und deren gleichzeitige qualitätsgerechte Plombierung. Die bei einem unbefugten Abreißen des Schlosses vom Schließstab erforderliche Kraft ist sehr groß. Dadurch, daß bei einem befugten Entriegeln der Vorrichtung das Schloß zerstört werden muß, kann ein mehrfach verwendbarer Schließstab mit hoher Festigkeit eingesetzt werden. Abhängig vom Wert des Inhalts des zu verschließenden Gegenstandes kann die zum Entriegeln der Vorrichtung benötigte Kraft vorher festgelegt und geheimgehalten werden. Nach dem Entriegeln wird die Vorrichtung nicht wieder an dem Gegenstand angebracht. Das Informationsschild bietet die Mög lichkeit, unmittelbar vor dem Anhängen der Vorrichtung an den zu verschließenden Transportbehälter sie mit den erforderlichen Plombierinformationen zu versehen, zum Beispiel mit der Nummer des Transportmittels, dem Kode der zuständigen Person des Absenders, dem Kode des Bestimmungsortes usw. Die Abnahme der erfindungsgemäßen Vorrichtung kann nur mit einer Sondereinrichtung durchgeführt werden.

Anhand von Zeichnungen werden Ausführungsbeispiele der Erfindung näher erläutert. Es zeigt:

Fig. 1 perspektivisch die Vorrichtung zum Verschließen und Plombieren von Gegenständen,

Fig. 2 in einer Seitenansicht den Schließstab der Vorrichtung,

Fig. 3 im Längsschnitt das an einem Einsteckkopf angebrachte Schloß der Vorrichtung,

Fig. 4 im Längsschnitt ein modifiziertes Schloß der Vorrichtung und

Fig. 5 perspektivisch die Vorrichtung vor dem Verschließen an einem Verschlußorgan eines Gegenstandes.

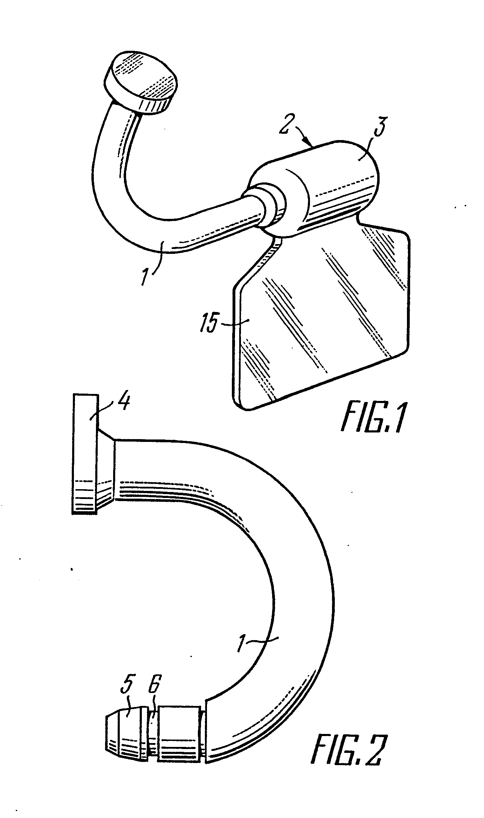

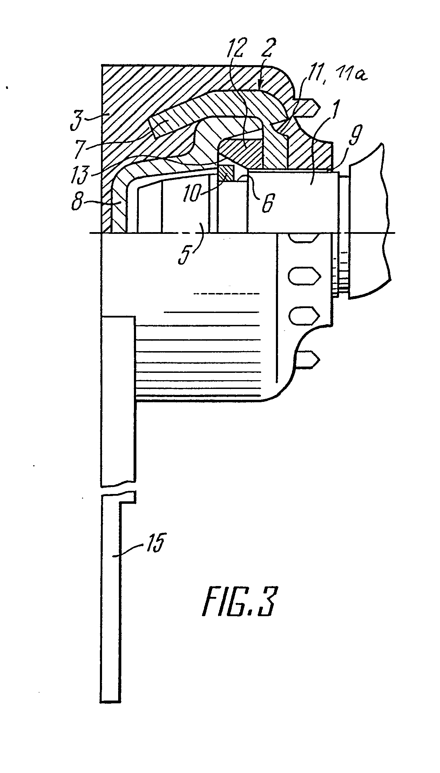

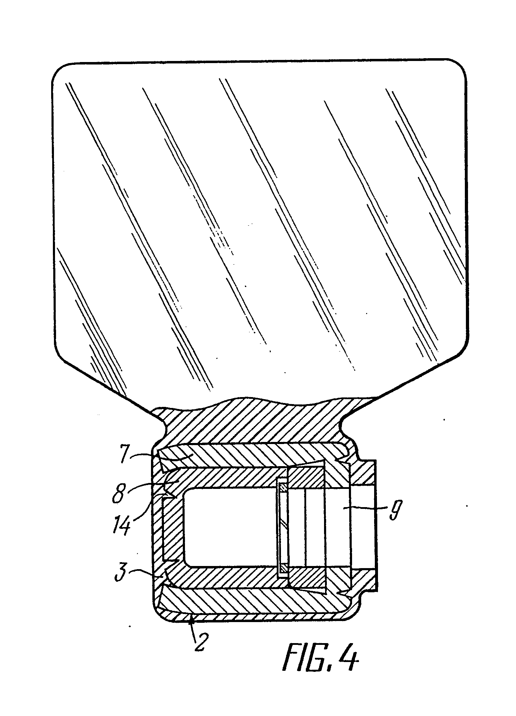

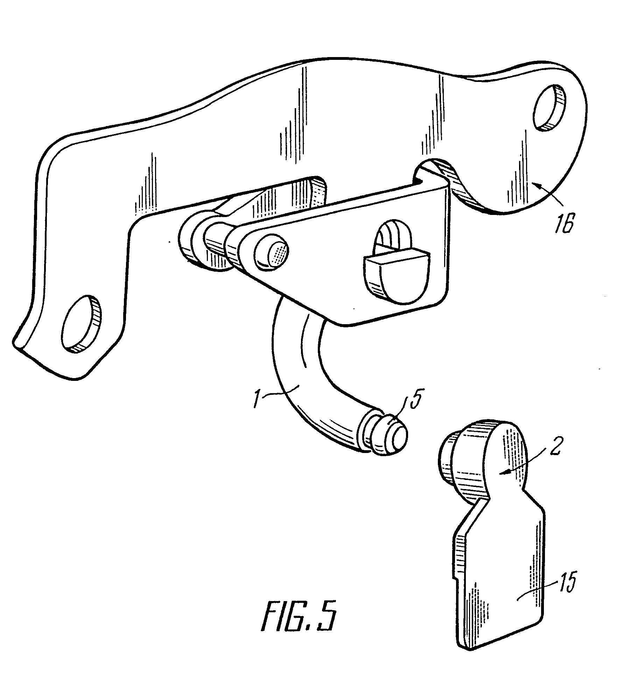

Die Vorrichtung zum Verschließen und Plombieren von Gegenständen setzt sich aus einem Schließstab 1 (Fig. 1), der bogenförmig gestaltet sein kann, und aus einem Schloß 2 zusammen, das in einem Kunststoffgehäuse 3 untergebracht ist. An dem einen Ende des Schließstabs 1 ist ein Anschlag 4 (Fig. 2), an dem anderen Ende ein kegel

stumpfförmiger Einsteckkopf 5 vorgesehen. Auf der Seite der größeren Grundfläche des Einsteckkopfes 5 ist am Schließstab 1 eine Ringnut 6 ausgebildet.

Das Schloß 2 (Fig. 3) hat die Form eines Bechers und besteht aus zwei miteinander verbundenen Teilen, von denen der eine ein Deckel 7 und der andere ein Stopfen 8 ist. Im Deckel 7 ist eine Öffnung 9 für den Durchgang des Einsteckkopfes 5 des Schließstabs 1 ausgeführt. In den Hohlraum des Schlosses 2 ist ein offener Sperring 10 eingebaut.

Die Vorrichtung ist mit einem Mittel 11 zur Gewährleistung einer vorher festgelegten Kraft versehen, die für die Zerstörung des Schlosses 2 erforderlich ist. Dieses Mittel 11 besteht aus einem ringförmigen Einschnitt 11a an der Stirnfläche des Schlosses 2 auf der Seite des Einsteckkopfes 5.

Um den offenen Sperring 10 vor Deformationen zu schützen, wird in dem Hohlraum des Schlosses 2 ein Abreißring 12 eingebaut. Der Außendurchmesser des Abreißringes 12 ist größer als der des offenen Sperrings 10, jedoch nicht größer als der Durchmesser des ringförmigen Einschnitts 11a. Der Abreißring 12 wird im Hohlraum des Schlosses 2 zwischen dem offenen Sperring 10 und der Innenfläche der Stirnwand des Schlosses 2 auf der Seite des Einsteckkopfes 5 angebracht. Die Innenfläche des Abreißrings 12 kann zylindrisch wie in Fig. 4 oder teilweise konisch wie in Fig. 3 sein. Die Ausführung der Innenfläche 13 des Abreißrings 12 auf der dem offenen Sperring 10 zugewandten Stirnseite in Form eines Konus gewährleistet eine erhöhte Festigkeit der Vorrichtung.

Die Vorrichtung kann mit einer zusätzlichen ringförmigen Aussparung 14 (Fig. 4) versehen werden, die an der Stirnfläche des Stopfens 8 ausgebildet ist. Die Aussparung 14 gestattet es, die Vorrichtung durch das Herausdrücken des Schließstabs 1 (Fig. 1) aus dem Schloß 2 zu entriegeln.

Die Vorrichtung ist mit einem Informationsschild 15 versehen, um erforderliche Plombier- und sonstige Informationen zu geben. Das Informationsschild 15 ist mit dem Kunststoffgehäuse 3 des Schlosses 2 in einem Stück gegossen.

Vor dem Anhängen der Vorrichtung an einen zu verschließenden Gegenstand werden in das Informationsschild 15 Plombierzeichen eingeprägt. Dann wird der Einsteckkopf 5 des Schließstabs 1 (Fig. 5) durch eine Öffnung in einer Auflegeleiste 16 des Gegenstands und darauf in die Öffnung 9 (Fig. 3) des Schlosses 2 eingeführt. Der Schließstab 1 wird von Hand gegen das Schloß 2 gepreßt und auf diese Weise am Einsteckkopf 5 des Schließstabs 1 verriegelt. Dabei erweitert sich der offene Sperring 10 beim Zusammenwirken mit der konischen Oberfläche 13 des Abreißrings 12 auf und schließt sich an der Ringnut 6 des Schließ

stabs 1 wieder.

Das Entriegeln bzw. die Abnahme der Vorrichtung erfolgt mit Hilfe einer nicht gezeigten Sondereinrichtung, mit der das Schloß 2 von dem Schließstab 1 gerissen wird. Dabei zerreißt der Deckel 7 durch das Vorhandensein des ringförmigen Einschnitts 11a an der im Querschnitt geschwächten Stelle, wobei der Abreißring 12 die Abreißkraft erhöht. Die Vorrichtung läßt sich auch durch das Herausdrücken des Schließstabs 1 aus dem Schloß 2 entriegeln. Zum Herausdrükken wird ebenfalls eine nicht gezeigte Sondereinrichtung verwendet, die in den Hohlraum des Schlosses 2 (Fig. 4) über den geschwächten Querschnitt im Stopfen 8 eingeführt wird.

Dieser Querschnitt wird durch das Vorhandensein der zusätzlichen ringförmigen Aussparung 14 gebildet und wirkt unmittelbar auf den Einsteckkopf 5 (Fig. 3) und nicht auf den Schließstab 1 ein.

**Ansprüche**

1. Vorrichtung zum Verschließen und Plombieren von Gegenständen, insbesondere von Transportbehältern,
- mit einem Schließstab (1), an dessen einem Ende ein Anschlag und an dessen anderem Ende ein kegelstumpfförmiger Einsteckkopf (5) vorgesehen ist,
- mit einer Ringnut (6) am Schließstab (1), die auf der Seite des Einsteckkopfs (5) mit der größeren Grundfläche ausgebildet ist,
- mit einem in einem Kunststoffgehäuse (3) angeordneten Schloß (2), das die Form eines Bechers hat und für das Anbringen am Schließstab (1) auf der Seite des Einsteckkopfes (5) vorgesehen ist, und
- mit mindestens einem offenen Sperring (10), der im Hohlraum des Schlosses (2) angeordnet ist und mit dem Schließstab (1) bei der Anordnung in dessen Ringnut (6) zusammenwirkt,
**gekennzeichnet,** durch ein Mittel (11) zur Gewährleistung der erforderlichen Kraft für die Zerstörung des Schlosses (2).

2. Vorrichtung nach Anspruch 1, dadurch **gekennzeichnet,** daß das Mittel (11) zur Gewährleistung der für die Zerstörung des Schlosses (2) erforderlichen Kraft ein ringförmiger Einschnitt (11a) auf der Stirnfläche des Schlosses (2) auf der Seite des Einsteckkopfes (5) ist.

3. Vorrichtung nach Anspruch 2, dadurch **gekennzeichnet,**
- daß das Mittel (11) zur Gewährleistung der für die Zerstörung des Schlosses (2) erforderlichen Kraft mit einem Abreißring (12) versehen ist, der sich im Hohlraum des Schlosses (2) zwischen dem offenen Sperring (10) und der Innenfläche der Stirnwand des Schlosses (2) auf der Seite des Einsteckkopfs (5) befindet.
- daß der Außendurchmesser des Abreißrings (12) größer als der des offenen Sperrings (10), jedoch nicht größer als der Durchmesser des ringförmigen Einschnitts (11a) ist, und
- daß das Schloß (2) aus zwei miteinander fest verbundenen Teilen (7, 8) besteht.

4. Vorrichtung nach Anspruch 3, dadurch **gekennzeichnet,** daß die Innenoberfläche (13) des Abreißrings (12) auf der dem offenen Sperring (10) zugewandten Stirnseite die Form eines Kegels hat.

5. Vorrichtung nach Anspruch 2, dadurch **gekennzeichnet,** daß das Mittel (11) zur Gewährleistung der für die Zerstörung des Schlosses (2) erforderlichen Kraft mit einer zusätzlichen ringförmigen Aussparung (14) versehen ist, die auf der vom Einsteckkopf (5) abgewandten Stirnseite des Schlosses (2) ausgebildet ist.

6. Vorrichtung nach einem der vorhergehenden Ansprüche, **gekennzeichnet,** durch ein Informationsschild (15), das mit dem Gehäuse (3) des Schlosses (2) fest verbunden ist.

FIG.1

FIG.2

EP 0 373 568 A2

FIG.3

FIG. 4

FIG.5